# EUROPEAN PATENT SPECIFICATION

(11) **EP 3 389 453 B1**
(45) Date of publication and mention of the grant of the patent: **10.03.2021**
(21) Application number: 16815686.7
(22) Date of filing: 13.12.2016
(51) Int. Cl.: A47J 31/40, A47J 31/44, A47J 42/50, A47J 31/46

(54) **DEVICE FOR PREPARING A BEVERAGE**
VORRICHTUNG ZUR ZUBEREITUNG EINES GETRÄNKS
DISPOSITIF DE PRÉPARATION D'UNE BOISSON

(30) Priority: 16.12.2015 NL 2015965
(43) Date of publication of application: 24.10.2018
(73) Proprietor: ETNA Coffee Equipment B.V., 7007 CM Doetinchem (NL)
(72) Inventor: VAN STOKKOM, Carolina Jacobo Johanna Maria, 7007 JG Doetinchem (NL); VEENHOF, Johannes, 6642 BJ Beuningen (NL)
(74) Representative: Jilderda, Anne Ayolt
(86) International application number: PCT/NL2016/050868
(87) International publication number: WO 2017/105227

(56) References cited:
- EP-A1- 1 093 746
- EP-A1- 2 186 454
- EP-A1- 2 721 976
- WO-A1-2004/098361
- WO-A1-2009/098535
- WO-A1-2009/098563
- WO-A1-2013/014040
- WO-A2-2011/048485
- WO-A2-2014/162236
- DE-A1- 2 922 022
- GB-A- 2 449 307
- US-A- 4 134 332
- US-A- 5 927 553
- US-A1- 2004 123 747
- US-B1- 8 230 774

## Description

The present invention relates to a device for preparing a beverage comprising a device housing with a device space which accommodates preparing means and at least one supply container for an ingredient of the beverage to be prepared, which supply container is provided with dosing means for drawing off therefrom and delivering a controlled quantity to the preparing means, wherein the preparing means debouch into a dispensing body for dispensing the prepared beverage. The document WO 2013/014040 A1 discloses a device for preparing a beverage.

The invention relates more specifically to such a device for preparing a hot beverage such as coffee in numerous varieties, tea, chocolate and/or soup. Such devices, commonly referred to as coffee machines or coffee vending machines, are able to prepare a hot beverage fully automatically from one or more separate ingredients such as coffee, milk (powder), chocolate powder and/or sugar by adding hot water. Such devices find particular application as such in office and other commercial environments, although fully automatic devices are also increasingly in demand for household use.

For safe utilization of such a device in a public environment it is important here that the supply container is closable; not only to avoid unauthorized removal of ingredients but also to ensure that no dubious components are added thereto. It is in addition or moreover desirable that a supply container can be refilled in practical manner without spillage therefrom. Quality of the beverage to be prepared, hygiene and safety are particularly important factors at the dispensing side of the device.

The present invention has for its object, among others, to provide a device for preparing a beverage with which one or more of the above stated requirements or wishes are satisfied to at least significant extent.

In order to achieve the stated object a device of the type described in the preamble has according to a first aspect of the invention the feature that the device space is closable with a device door, which device door can be manipulated between a closed position closing the device space and an open position allowing access to the device space, that on a filling side the supply container protrudes with a filling side outside the device housing and is closable with a cover, that the cover and the device door are provided with mutual locking means which lock the cover on the supply container in the closed position of the device door, wherein in the open position of the device door the cover is releasable from the supply container in order to leave the filling side thereof at least partially clear. The supply container is thus equipped with locking means which are able and configured to co-act with the device door of the device housing in the sense that a closed and locked device door simultaneously also locks the cover on the supply container. The supply container hereby requires no separate lock means, this making the device according to the invention particularly practical and user-friendly.

The locking means which fix the cover on the supply container when the device door is closed can take diverse forms. In a preferred embodiment the device according to the invention is however characterized in that the locking means comprise a receiving member and a receiving cavity receiving the receiving member, wherein the receiving member extends from a first of the cover and the device door and the receiving cavity comprises an edge which extends from a second of the cover and the device door and behind which the receiving member is received in the closed position of the device door. The locking means thus comprise only a set of passive members which will be little susceptible to malfunction.

A particular embodiment of the device according to the invention has in this respect the feature that the receiving member comprises a protruding tongue of the cover which extends therefrom toward the device door, and that the receiving cavity comprises a free space inside the device door with an edge behind which the tongue is received in the closed position of the device door, wherein the tongue is fully released in the open position of the device door. The receiving cavity can thus extend with the edge over at least a large part of a width of the device door. Not only is the exact positioning of the tongue hereby not very critical, the edge can thus also simultaneously lock, with the same large tolerance, the tongues of a number of supply containers placed adjacently of each other. This makes this embodiment exceptionally practical, user-friendly and operationally reliable.

A device of the type referred to here is not infrequently applied in a kitchen unit or kitchenette with a worktop or countertop provided with cabinets protruding thereabove. The upper cabinets and the worktop are a limited distance apart, while in many cases the intermediate space would in principle form an ideal location for placing of a device of the type referred to here.

With a view to an exceptionally efficient utilization of this intermediate space, a further preferred embodiment of the device according to the invention has the feature that the cover is received over an outer end of the supply container in an at least substantially linear movement directed from a frontal visible side to a rear side of the device, wherein a wall of the container and an inner side of the cover are both provided with mutually receiving shoulders, wherein during said linear movement a shoulder of the cover is received under a shoulder of the wall of the supply container. The cover is thus a sliding cover which is pushed from front to rear over the filling side of the supply container.

By making use of such a linear movement no or hardly any additional height is required to refill the supply container in the device. The total available height between a worktop and a cabinet hanging thereabove can thus be at least substantially wholly utilized for the device, which is preferably adapted thereto in respect of overall device height. By sliding the cover over the outer end of the supply container the shoulder formed on the cover moves under the shoulder extending from the supply container. A fixation of the cover on the supply container thus also takes place on the device side.

A further preferred embodiment of the device has the feature here that both shoulders comprise mutually receiving flanks which make an angle with the linear movement of the cover. Because of such an inclination of the mutually facing flanks of the two shoulders the cover is self-positioning and its shoulder nestles of its own accord under that of the supply container.

The above specified embodiment of a device for preparing a beverage provides the particular option of replenishing the supply container while the supply container remains in the device. It may be desirable in some circumstances to be able to wholly remove a supply container from the device in order to refill it or so that the device can undergo further inspection or further maintenance.

In a further preferred embodiment the device has for this purpose the feature that the supply container is removable from the device housing on a filling side and comprises an outflow opening on a side remote from the filling side, that the supply container comprises on a filling side a handle which is pivotable from a flat, ready-to-operate position to a raised removable position, that the handle extends from at least one first arm of an arm assembly which is connected for pivoting around a pivot axis to a wall of the supply container and which comprises at least one opposite second arm on a side of the pivot axis remote from the first arm, and that the outflow opening is closable by closing means which extend from the at least one second arm, wherein in the lying position of the handle the closing means leave the outflow opening clear and in the raised removable position close off the outflow opening.

The supply container can thus be easily taken out by the handle by pivoting the handle from the ready-to-operate position to the removable position. Because the closing means hereby simultaneously pivot into a closing position in front of the outflow opening, outflow and spillage of a supply possibly present in the container are avoided.

In a preferred embodiment the device according to the invention is characterized in that the arm assembly with the handle and the closing means are located inside the supply container. The handle thus lies concealed behind the cover and the handle is only accessible after the cover has been removed. Locking of the cover thus avoids unauthorized removal of the supply container.

A particularly practical and economic embodiment of the device is characterized according to the invention in that the closing means comprise a closing wall which is pivotable in front of the outflow opening and that the arm assembly with the handle and the closing means comprise a unitary body which is connected pivotally about the pivot axis to the supply container. The handle and the closing means are thus provided by means of a single component. This not only makes the whole entity strong and robust, it can moreover be manufactured in relatively cost-effective manner. This component advantageously comprises in this respect a single injection-moulded body of a suitable plastic.

The removability of the supply container provides a particularly great advantage in a further particular embodiment of the device which is characterized in that the supply container comprises a bean reservoir for coffee beans. The bean reservoir is thus removable at all times in exceptionally practical manner irrespective of whether a supply of coffee beans is still present therein. A coffee grinder which will in that case form part of the preparing means and connects to the bean reservoir thus remains accessible in practical manner for maintenance and inspection. The bean reservoir can moreover be refilled easily outside the device without the risk of beans pouring out. In a further preferred embodiment the device according to the invention has the feature here that locking means extend from the arm assembly which lock the supply container in the device housing in the ready-to-operate position and release the supply container for removal in the removable position, wherein the device is more particularly characterized in that the locking means comprise a hook member which engages behind a protrusion in the ready-to-operate position and is released from the protrusion in the removable position.

The preparing means present the prepared beverage via the dispensing body, from which it can be removed for consumption. It has been found that particularly this component of the device is also responsible for the final quality of the beverage which is removed, in particular where coffee specialties are concerned which have to be covered with a so-called crema layer.

In order to enhance this quality a device according to the invention has in a preferred embodiment the feature that the dispensing body comprises a dual spout which is in open communication with an inlet, wherein the dispensing body comprises a central inlet part, from which the inlet extends with a coupling part and to which at least substantially identical spout parts are releasably coupled on either side, and that the coupling part of the inlet and the spout are oriented at least substantially transversely relative to each other. The at least substantially right-angled placing of the inlet and the spout relative to each other is found to have a favourable effect on the formation of a crema layer in products which require such a layer. The mutual releasability of the parts of the dispensing body here also enhance easy cleaning of the dispensing body, while the individual parts can if desired each be produced integrally as injection-moulded body of a suitable plastic. This latter brings down the costs of manufacturing the component.

In a particular embodiment the device according to the invention is further characterized in that the dispensing body comprises a multiple dual spout in combination with a multiple inlet, wherein each inlet is in individual open communication with a dual spout of the multiple dual spout. The dispensing body therefore has individual spouts which can thus be employed for different products. Cross-contamination of different beverages to be prepared and dispensed with the same device is hereby prevented to significant extent.

The mutual releasability of the different sections of the dispensing body nevertheless still allows only three injection-moulded parts to be applied therefor, whereby the cost price of the dispensing body is not increased, or hardly so. A further particular embodiment of the device therefore has the feature that the inlet part and the spout parts comprise injection-moulded parts of plastic.

In order to avoid an unintended outflow of the product via the separation between the individual parts of the dispensing body a further preferred embodiment of the device according to the invention has the feature that the spout parts and the inlet part fit together and that a liquid barrier is provided therebetween, and more particularly that the liquid barrier comprises a flexible skirt which, inside an insertion cavity of the inlet part, extends integrally from a wall thereof against which a plug part of the spout part formed complementarily to the insertion cavity closes in at least substantially leak-tight manner. Because of such a water barrier there can be a relatively large fitting tolerance between the components while a leak-tightness is nevertheless preserved.

The beverage is finally received in crockery, a pot or other form of holder from which the product will be consumed by the user. Because of a wide variety in height of various forms of such holders as are met with in practice, it is desirable that a mutual distance between the dispensing body and the holder is adjustable thereto. In a further preferred embodiment the device has for this purpose the feature that the platform is axially adjustable over a linear guide and acts here on the guide under bias of manually liftable tensioning means with a friction body. An elevation of the holder can thus be easily adjusted in order to shorten or increase a distance to the spout in accordance with the size of the holder.

The dispensing body can thus itself remain stationary, this being advantageous in respect of the necessary liquid connection(s) thereof. Because of the tensioning means the friction body exerts a pressure on the guide and provides here for a stable and substantially non-slip fixation on the guide which allows a continuously variable adjustment of the platform. The tensioning means can be embodied per se in various ways, although a further particular embodiment of the device has the feature that the tensioning means comprise a tensioned leaf spring, wherein the tensioning means more particularly comprise a pressing member which, when touched, removes a tension of the leaf spring from the friction member. The invention will now be further elucidated on the basis of an exemplary embodiment and an accompanying drawing. In the drawing:
- figure 1: shows an exemplary embodiment of a device according to the invention in an opened position;
- figure 2: shows the device of figure 1 in a closed position;
- figure 3: shows a supply container of the device of figure 1 in a closed position;
- figure 4: shows the supply container of the device of figure 1 in a partially opened position;
- figure 5: shows the supply container of the device of figure 1 in fully open position;
- figure 6: shows a bean container as applied in the device of figure 1 in a ready-to-operate position;
- figure 7: shows the bean container as applied in the device of figure 1 in a removable position;
- figure 8: shows the bean container as applied in the device of figure 1 in a removed position;
- figure 9: is an exploded view of a dispensing body as applied in the device of figure 1; and
- figure 10: is an exploded view of a platform for a holder as applied in the device of figure 1.

The figures are otherwise purely schematic and not all drawn to scale. Some dimensions in particular may be exaggerated to greater or lesser extent for the sake of clarity. Corresponding parts are generally designated in the figures with the same reference numeral.

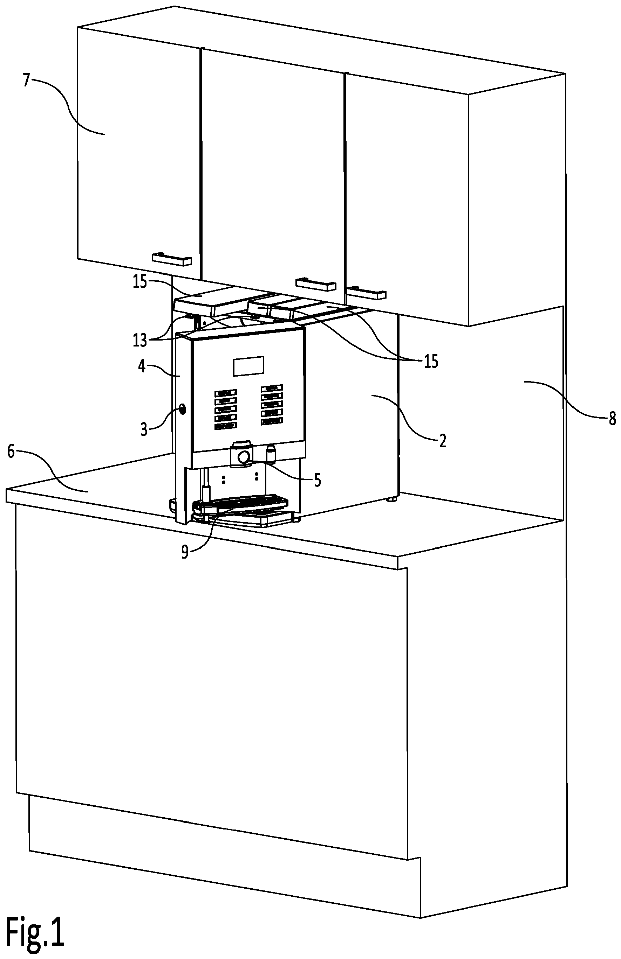

Figure 1 shows a device according to the invention for preparing hot beverages such as coffee, tea, chocolate and/or variants thereof. This is a fully automatic device, also referred to as espresso or coffee machine, which is able and configured to prepare fresh coffee. Device 1 comprises for this purpose a bean reservoir 10 for coffee beans and several supply containers 11,12 for powdered additives such as sugar, topping and/or chocolate powder. Device 1 is wholly accommodated in a device housing 2 having internally a device space which is closable with a device door 4. Device door 4 is provided with a lock 3 with which the device space can be effectively locked.

The device space accommodates preparing means not further shown here. The device comprises as such for instance a coffee grinder for grinding beans from the reservoir to ground coffee powder, a water reservoir or a fixed water connection coupled to heating means such as a boiler or thermo-block for bringing the water to a desired temperature, a decoction group for preparing espresso or other coffee variants from hot water and the ground coffee, and dosing means for taking a desired quantity of the respective ingredient as additive from the different supply containers. The separate product flows are guided via separate conduits to a dispensing body 5 and dispensed therefrom to a beaker, glass, cup or other crockery of a user placed on a platform 9 as a beverage prepared for him/her.

Figure 1 shows a typical setup of such a device in which space is provided therefor on a worktop 6 of a kitchen, kitchenette, pantry or other suitable space under a series of cabinets 7 protruding thereabove. This alcove 8 typically has a height of about 50 cm, which requires a relatively compact device housing 2 in such a situation, particularly in respect of a height thereof. In order to utilize this space as efficiently as possible the different containers 10..12 are fitted with a sliding cover 15 so that they are held in a closed position during use. Both covers 15 and walls 14 of the supply containers are manufactured in this example from a transparent, at least translucent plastic so that a current degree of filling of the respective supply container 10..12 is directly visually discernible. A suitable plastic is for instance polycarbonate or polymethyl methacrylate (PMMA).

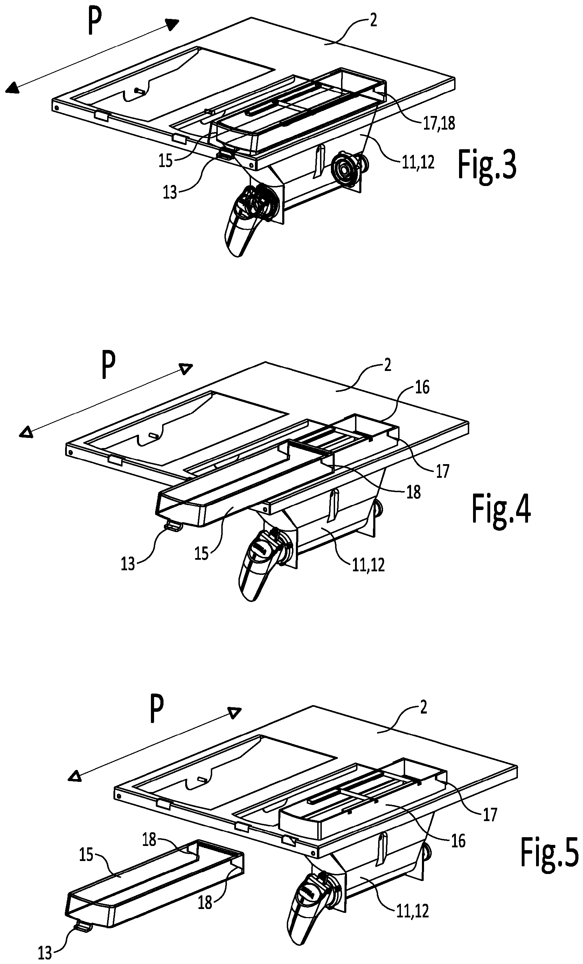

Covers 15 can be pushed over a filling side of the respective container in a linear movement directed from the shown visible side to an opposite rear side and designated in figure 5 with an arrow P in order to close container 10..12 or, vice versa, can be slid away in order to open supply container 10..12 so that it can be refilled while the device remains under upper cabinet 7. The container protrudes for this purpose with only a limited part 16 above the device housing and further requires substantially no clear height above the device housing. On a rear side the supply containers and their covers mutually comprise shoulders 17,18 which mutually engage in order to thus fix the cover to the supply containers on this side, see also figures 4 and 5. The inclination of shoulders 17,18 relative to the sliding direction P ensures that they come together without problem, and cover 15 is as it were self-positioning.

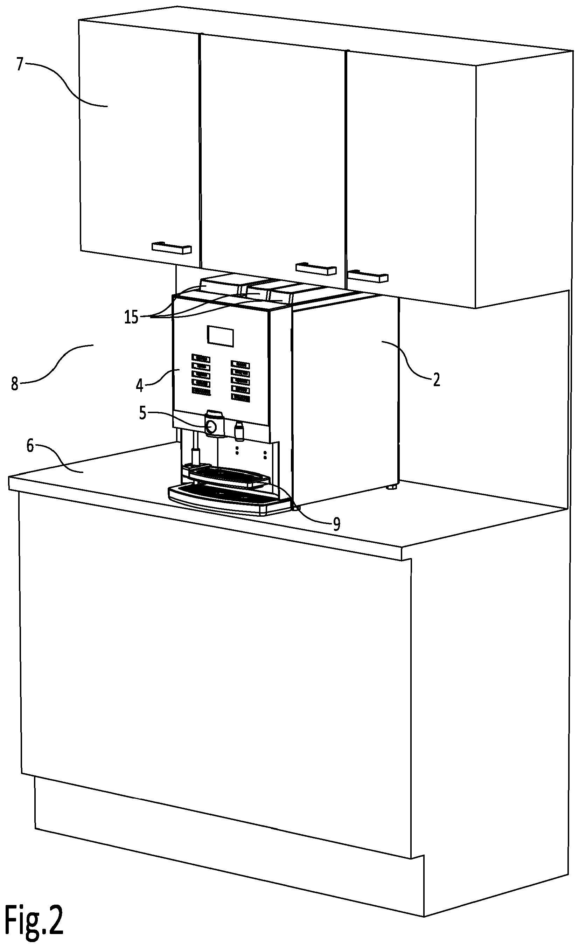

Apart from for an interim refilling of the supply containers, it is important that the supply container is otherwise effectively closed. It is thus not only possible to avoid unauthorized removal of ingredients, but it is also possible to prevent constituents being added, deliberately or otherwise, to the containers which do not belong there. Each cover has for this purpose on a visible side a protruding tongue 13, see also figure 3, which serves as receiving member for receiving in a receiving cavity 23 located inside device door 2. Tongues 13 together fall here behind an edge 25 of cavity 23 inside device door 2 as soon as the device door is closed. In the closed position, see figure 2, device door 2 can be locked with its own door lock 3, whereby covers 15 are thus simultaneously locked onto supply containers 10..12. The protruding tongues 13 of the covers and the inner edge 23 of device door 2 in this way form particularly practical locking means for supply containers 10..12 which require no further attention.

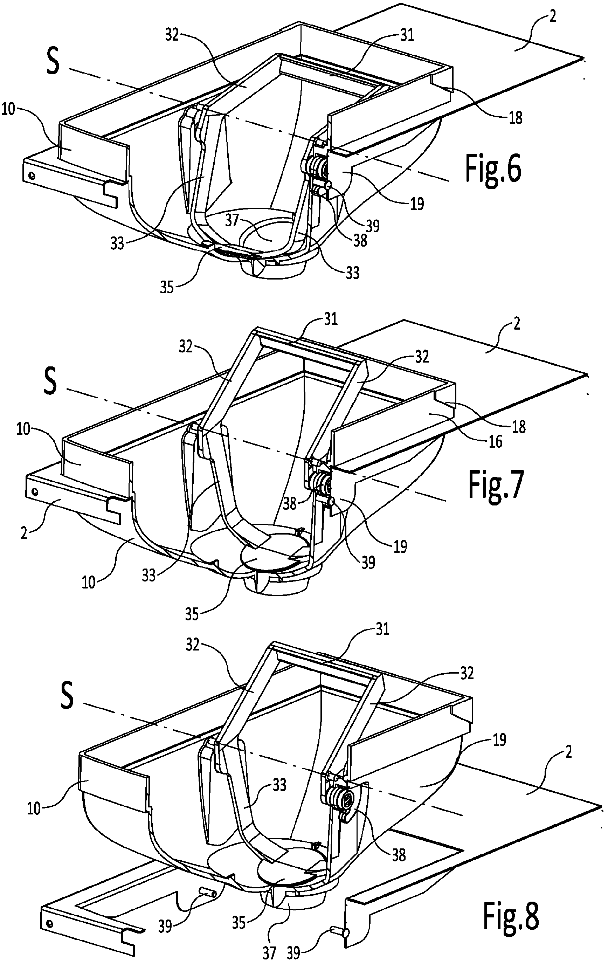

Meriting particular mention is the supply container for coffee beans 10, also referred to as bean container. In the present exemplary embodiment this, together with a possible content thereof, is embodied in wholly removable manner from device housing 2 on a filling side. Bean container 10 comprises for this purpose on the filling side a handle 31 which is pivotable from the ready-to-operate position shown in figure 6 to the removable position shown in figure 7 in which container 10 can be lifted and taken out as shown in figure 8. Handle 31 extends here from a pivoting body 30 which comprises an arm assembly 32,33 connected around a pivot axis S to a wall 19 of supply container 10. Handle 31 extends from a first set of arms 32 of the arm assembly, while the arm assembly comprises on an opposite side a second set of arms 33 from which extend closing means 35 which block an outflow opening 37 of container 10 in the removable position. The closing means comprise a slide 35 which is received between the opposite second set of arms 33 and which pivots together with handle 31 from the position shown in figure 6, in which outflow opening 37 is left clear, to the closing position shown in figures 7 and 8 in which outflow opening 37 is closed off thereby. Beans are thus prevented from flowing out when container 10 is taken out of the device.

As shown in the figures, pivoting body 30 comprises an entity which can for instance be manufactured by injection moulding from a suitable plastic. In addition to arm assembly 32,33 this entity also comprises handle 31 and closing body 35, whereby play or the like between them is precluded and production costs moreover saved. Provided on pivoting body 30 are locking means in the form of a set of hook members 38 which extend on either side thereof in the ready-to-operate position and engage under a corresponding set of locking protrusions 39 which extend from device housing 2. This fixes bean container 10 in the ready-to-operate position in the device housing. In the removable position the hooks 38 are also pivoted and released by protrusions 39.

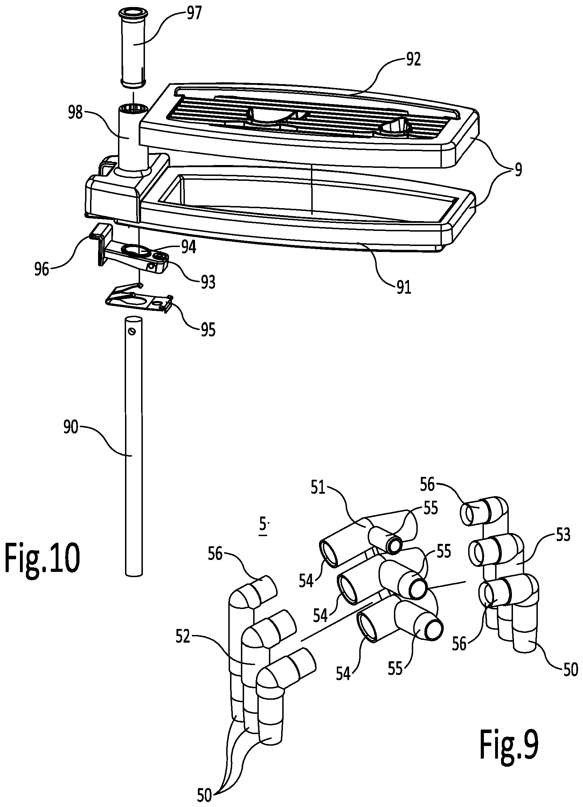

The beverage prepared by the device can be taken off at dispensing body 5. The dispensing body comprises in this embodiment, see figure 9, a central inlet part 51 having on either side a spout part 52,53 with a multiple spout 50. The dispensing body thus provides a multiple dual spout, i.e. one on either side, with a spout on each side of the central inlet part, in this embodiment for three separate product flows. This avoids cross-contamination between these product flows, which undeniably enhances the quality of each product. The dual spouts 50 are each in open communication with a separate inlet 55 on inlet part 51 with a coupling part to which a hose or other conduit for the product is coupled at an outer end. Central inlet part 51 thus comprises a multiple (in this embodiment triple) inlet 55. Each of the inlets 55 is oriented here transversely of an axis of the spout 50 corresponding thereto. This right-angled orientation is likewise found to have a positive effect on the product quality, particularly where dispensing of coffee specialities characterized by a crema layer floating thereon, such as espresso, is involved.

The parts 51..53 of dispensing body 5 shown in figure 9 each comprise an injection-moulded part which can be manufactured integrally at relatively low cost price from a suitable plastic such as polyethylene, polypropylene, polycarbonate, ABS or polystyrene. For each of the connections inlet part 51 provides internally a thin, and therefore flexible skirt 54 by locally applying a relatively small wall thickness. This skirt 54 fits smoothly onto the corresponding connection 56 in spout part 52,53 and thus provides an effective water barrier preventing leakage.

The product can be drawn off from the dispensing body and received in a suitable holder placed thereunder. In order to make allowance here for different heights of common holders, such as small and large beakers, cups, glasses or other crockery, the device provides a platform 9 which is height-adjustable over a linear guide 90, see figure 10. Platform 9 comprises substantially two parts, viz. a leak-tight drip tray 91 and a grating 92 placed thereon, so that possibly dripping water or moisture can be collected.

The guide comprises a vertical rod body 90 over which the platform 91,92 is axially displaceable via a friction body 93. Rod body 90 is formed for instance from a metal such as aluminium, while friction body 93 comprises an injection-moulded part of plastic with a large bore 94 in which the rod body is received. A leaf spring 95 exerts a bias here on friction body 93 which provides for a slight inclination relative to rod body 90, whereby friction body 93 clamps fixedly thereon and fixes platform 91,92. This bias, and thereby this inclination, can be released with a pressing member 96 which extends for this purpose from the friction body. An exceptionally practical continuously variable adjustment of the platform over the rod body is thus possible. An intermediate fitting bush 97 and sleeve 98 here obviate a certain play between the two components 90, 93, which enhances stability.

The guiding of platform 91,92 over rod body 90 is not only continuously variable but also allows pivoting of the platform therearound. The platform can thus be pivoted away if desired at any height below dispensing body 5 in order to make room for a coffee pot or similar relatively high holder in order to optimally utilize a space under the dispensing body.

Although the invention has been further elucidated above on the basis of only a single exemplary embodiment, it will be apparent that the invention is by no means limited thereto. On the contrary, many variations and embodiments are still possible within the scope of the invention defined by the claims for a person with ordinary skill in the art.

## Claims

1. Device for preparing a beverage comprising a device housing (2) with a device space which accommodates preparing means and at least one supply container (10,11,12) for an ingredient of the beverage to be prepared, which supply container is provided with dosing means for drawing off therefrom and delivering a controlled quantity to the preparing means, wherein the preparing means debouch into a dispensing body for dispensing the prepared beverage, **characterized in that** the device space is closable with a device door (4), which device door (4) can be manipulated between a closed position closing the device space and an open position allowing access to the device space, that on a filling side the supply container protrudes with a filling side outside the device housing and is closable with a cover (15), that the cover and the device door are provided with mutual locking means (13) which lock the cover (15) on the supply container in the closed position of the device door (4), wherein in the open position of the device door (4), the cover (15) is releasable from the supply container (10,11,12) in order to leave the filling side (16) thereof at least partially clear.

2. Device as claimed in claim 1, **characterized in that** the locking means (13) comprise a receiving member (13) and a receiving cavity (23) receiving the receiving member, wherein the receiving member extends from a first of the cover (15) and the device door (4) and the receiving cavity (230 comprises an edge (25) which extends from a second of the cover (15) and the device door (4) and behind which the receiving member (13) is received in the closed position of the device door (4).

3. Device as claimed in claim 2, **characterized in that** the receiving member comprises a protruding tongue (13) of the cover (15) which extends therefrom toward the device door (4), and that the receiving cavity (23) comprises a free space inside the device door with an edge behind which the tongue is received in the closed position of the device door, wherein the tongue is fully released in the open position of the device door.

4. Device as claimed in claim 1, 2 or 3, **characterized in that** the cover (15) is received over an outer end of the supply container (10..12) in an at least substantially linear movement directed from a frontal visible side to a rear side of the device, wherein a wall (14) of the container and an inner side of the cover (15) are both provided with mutually receiving shoulders (17,18), wherein during said linear movement a shoulder of the cover is received under a shoulder of the wall of the supply container.

5. Device as claimed in claim 4, **characterized in that** both shoulders (17,18) comprise mutually receiving flanks which make an angle with the linear movement of the cover.

6. Device as claimed in claim 1, **characterized in that** the supply container (10) is removable from the device housing on a filling side and comprises an outflow opening (37) on a side remote from the filling side, that the supply container comprises on a filling side a handle (30..33) which is pivotable from a flat, ready-to-operate position to a raised removable position, **in that** the handle extends from at least one first arm (32) of an arm assembly (32,33) which is connected for pivoting around a pivot axis (S) to a wall (19) of the supply container (10) and which comprises at least one opposite second arm (33) on a side of the pivot axis (S) remote from the first arm (32), and that the outflow opening (37) is closable by closing means (35) which extend from the at least one second arm (33), wherein in the lying position of the handle (30..33) the closing means (35) leave the outflow opening (37) clear and in the raised removable position close off the outflow opening (37).

7. Device as claimed in claim 6, **characterized in that** the arm assembly (30..35) with the handle and the closing means are located inside the supply container (10).

8. Device as claimed in claim 6 or 7, **characterized in that** the closing means comprise a closing wall (35) which is pivotable in front of the outflow opening and that the arm assembly with the handle and the closing means comprise a unitary body which is connected pivotally about the pivot axis (S) to the supply container (10).

9. Device as claimed in claim 6, 7 or 8, **characterized in that** the supply container (10) comprises a bean reservoir for coffee beans.

10. Device as claimed in claim 9, **characterized in that** locking means (38) extend from the arm assembly (30..35) which lock the supply container (10) in the device housing in the ready-to-operate position and release the supply container for removal in the removable position.

11. Device as claimed in claim 10, **characterized in that** the locking means comprise a hook member (38) which engages behind a protrusion (39) in the ready-to-operate position and is released from the protrusion in the removable position.

12. Device as claimed in claim 1, **characterized in that** the dispensing body comprises a dual spout which is in open communication with an inlet, wherein the dispensing body comprises a central inlet part (51), from which the inlet extends with a coupling part and to which at least substantially identical spout parts (52,53) are releasably coupled on either side, and that the coupling part of the inlet and the spout parts are oriented at least substantially transversely relative to each other.

13. Device as claimed in claim 12, **characterized in that** the dispensing body comprises a multiple dual spout (52,53) in combination with a multiple inlet (55), wherein each inlet is in individual open communication with a dual spout of the multiple dual spout.

14. Device as claimed in claim 12 or 13, **characterized in that** the inlet part (51) and the spout parts (52,53) comprise injection-moulded parts of plastic.

15. Device as claimed in claim 12, 13 or 14, **characterized in that** the spout parts (52..55) and the inlet part fit together and that a liquid barrier (54) is provided therebetween.

16. Device as claimed in claim 15, **characterized in that** the liquid barrier comprises a flexible skirt (54) which, inside an insertion cavity of the inlet part, extends integrally from a wall thereof against which a plug part of the spout part formed complementarily to the insertion cavity closes in at least substantially leak-tight manner.

17. Device as claimed in claim 1, **characterized in that** the preparing means debouch into a dispensing body (51) with a spout (52,53) for dispensing the prepared beverage to a holder placed on a platform (9), and **in that** the platform is axially adjustable over a linear guide (90) and acts on the guide (90) under bias of manually liftable tensioning means (95) with a friction body (93).

18. Device as claimed in claim 17, **characterized in that** the tensioning means comprise a tensioned leaf spring (95).

19. Device as claimed in claim 18, **characterized in that** the tensioning means comprise a pressing member (96) which, when touched, removes a tension of the leaf spring (95) from the friction member (93).

## Patentansprüche

1. Vorrichtung zur Zubereitung eines Getränks umfassend ein Gerätegehäuse (2) mit einem Vorrichtungsraum der Zubereitungsmittel und wenigstens einen Vorratsbehälter (10, 11, 12) für eine Zutat des zuzubereitenden Getränks beherbergt, der Vorratsbehälter mit Dosiermitteln zum Entnehmen aus dem Selbigen und zum Liefern einer festgelegten Menge an die Zubereitungsmittel ausgestattet ist, wobei die Zubereitungsmittel in einen Ausgabekörper zum Ausgeben des zubereiteten Getränks münden, **dadurch gekennzeichnet, dass**
der Vorrichtungsraum mit einer Gerätetür (4) verschließbar ist, welche zwischen einer geschlossenen Stellung, in der der Vorrichtungsraum geschlossen ist, und einer geöffneten Stellung, in der ein Zugang zum Vorrichtungsraum ermöglicht wird, bewegt werden kann, dass der Vorratsbehälter auf einer Befüllseite mit einer Befüllseite aus dem Vorrichtungsraum herausragt und mit einer Abdeckung (15) verschließbar ist, dass
die Abdeckung und die Gerätetür mit gemeinsamen Verriegelungsmitteln (13) versehen sind, welche die Abdeckung (15) auf dem Vorratsbehälter in der geschlossenen Stellung der Gerätetür (4) verriegeln, wobei die Abdeckung (15) in der offenen Stellung der Gerätetür (4) vom Vorratsbehälter (10, 11, 12) lösbar ist, um die Befüllseite (16) des Vorratsbehälters zumindest abschnittsweise freizugeben.

2. Vorrichtung gemäß Anspruch 1,
**dadurch gekennzeichnet, dass**
die Verriegelungsmittel (13) ein Aufnahmemittel (13) und eine das Aufnahmemittel aufnehmende Aufnahmeaussparung (23) umfassen, wobei sich das Aufnahmemittel ausgehend von einer ersten der Abdeckung (15) und der Gerätetür (4) erstreckt und die Aufnahmeaussparung (23) eine Kante (25) umfasst, welche sich von einer zweiten der Abdeckung (15) und der Gerätetür (4) erstreckt und hinter der das Aufnahmemittel (13) in der geschlossenen Stellung der Gerätetür (4) aufgenommen wird.

3. Vorrichtung gemäß Anspruch 2,
**dadurch gekennzeichnet, dass**
das Aufnahmemittel eine hervorstehende Zunge (13) der Abdeckung (15) umfasst, welche sich ausgehend von dieser in Richtung der Gerätetür (4) erstreckt, und dass
die Aufnahmeaussparung (23) einen freien Raum in der Gerätetür umfasst, mit einer Kante hinter der die Zunge in der geschlossenen Stellung der Gerätetür aufgenommen wird, wobei die Zunge in der geöffneten Stellung der Gerätetür vollständig freigegeben ist.

4. Vorrichtung gemäß Anspruch 1, 2 oder 3,
**dadurch gekennzeichnet, dass**
die Abdeckung (15) über einem äußeren Ende des Vorratsbehälters (10..12) mit einer wenigstens im Wesentlichen linearen von einer frontalen sichtbaren Seite zu einer Rückseite der Vorrichtung gerichteten Bewegung aufgenommen ist, wobei eine Wand (14) des Behälters und eine innere Seite der Abdeckung (15) beide mit sich gegenseitig aufnehmenden Schultern (17, 18) versehen sind, wobei während besagter linearerer Bewegung eine Schulter der Abdeckung unter einer Schulter der Wand des Vorratsbehälters aufgenommen wird.

5. Vorrichtung gemäß Anspruch 4,
**dadurch gekennzeichnet, dass**
beide Schultern (17, 18) sich gegenseitig aufnehmende Flanken umfassen, die einen Winkel mit der linearen Bewegung der Abdeckung ausbilden.

6. Vorrichtung gemäß Anspruch 1,
**dadurch gekennzeichnet, dass**
der Vorratsbehälter (10) aus dem Gerätegehäuse an einer Befüllseite entnehmbar ist und eine Ausflussöffnung (37) an einer von der Befüllseite entfernten Seite umfasst, dass
der Vorratsbehälter an einer Befüllseite einen Griff (30..33) umfasst, welcher aus einer flachen, für den Einsatz bereiten Stellung in eine erhobene entfernbare Stellung verschwenkbar ist, dass sich der Griff ausgehend von wenigstens einem ersten Arm (32) einer Armanordnung (32, 33) erstreckt, welche an einer Wand (19) des Vorratsbehälters (10) zum Verschwenken um eine Schwenkachse (S) befestigt ist, und welche wenigstens einen gegenüberliegenden zweiten Arm (33) an einer dem ersten Arm (32) entfernten Seite der Schwenkachse (S) umfasst, und, dass
die Ausflussöffnung (37) durch Verschließmittel (35) verschließbar ist, welche sich vom dem wenigstens einen zweiten Arm (33) aus erstrecken, wobei die Verschließmittel (35) in der liegenden Stellung des Griffs (30..33) die Ausflussöffnung (37) frei lassen und die Ausflussöffnung (37) in der erhobenen entfernbaren Stellung abschließen.

7. Vorrichtung gemäß Anspruch 6,
**dadurch gekennzeichnet, dass**
die Armanordnung (30..35) mit dem Griff und den Verschließmitteln im Vorratsbehälter (10) liegt.

8. Vorrichtung gemäß Anspruch 6 oder 7,
**dadurch gekennzeichnet, dass**
die Verschließmittel eine Verschließwand (35) umfassen, welche vor die Ausflussöffnung (37) verschwenkbar ist, und, dass die Armanordnung mit dem Griff und den Verschließmitteln einen einheitlichen Körper umfasst, welcher verschwenkbar um die Schwenkachse (S) an den Vorratsbehälter (10) angeschlossen ist.

9. Vorrichtung gemäß Anspruch 6, 7 oder 8,
**dadurch gekennzeichnet, dass**
der Vorratsbehälter (10) einen Bohnenvorrat für Kaffeebohnen umfasst.

10. Vorrichtung gemäß Anspruch 9,
**dadurch gekennzeichnet, dass**
sich Arretiermittel (38) von der Armanordnung (30..35) aus erstrecken, welche den Vorratsbehälter (10) im Gerätegehäuse in der zum Einsatz bereiten Stellung arretieren und den Vorratsbehälter zum Entfernen in die entfernbare Stellung entlassen.

11. Vorrichtung gemäß Anspruch 10,
**dadurch gekennzeichnet, dass**
die Arretiermittel ein Hakenmittel (38) umfassen, welches in der zum Einsatz bereiten Stellung hinter einen Vorsprung (39) eingreift und vom Vorsprung in der entfernbaren Stellung freigegeben ist.

12. Vorrichtung gemäß Anspruch 1,
**dadurch gekennzeichnet, dass**
der Ausgabekörper einen Doppelausguss umfasst, welcher in offener Kommunikation mit einem Eintritt steht, wobei der Ausgabekörper einen zentralen Eintrittsteil (51) umfasst, von welchem sich der Eintritt aus mit einem Kupplungsteil erstreckt und mit welchem wenigstens im Wesentlichen identische Ausgussteile (52, 53) auf beiden Seiten lösbar gekoppelt sind, und, dass
das Kupplungsteil des Eintritts und die Ausgussteile wenigstens im Wesentlichen quer relativ zueinander orientiert sind.

13. Vorrichtung gemäß Anspruch 12,
**dadurch gekennzeichnet, dass**
der Ausgabekörper einen Multi-Doppelausguss (52, 53) in Kombination mit einem Multi-Eintritt (55) umfasst, wobei jeder Eintritt in individueller offener Kommunikation mit einem Doppelausguss des Multi-Doppelausgusses steht.

14. Vorrichtung gemäß Anspruch 12 oder 13,
**dadurch gekennzeichnet, dass**
der Eintrittsteil (51) und die Ausgussteile (52, 53) Spritzgussteile aus Kunststoff umfassen.

15. Vorrichtung gemäß Anspruch 12, 13 oder 14,
**dadurch gekennzeichnet, dass**
die Ausgussteile (52..55) und der Eintrittsteil zusammenpassen und, dass eine Flüssigkeitsbarriere (54) zwischen ihnen bereitgestellt wird.

16. Vorrichtung gemäß Anspruch 15,
**dadurch gekennzeichnet, dass**
die Flüssigkeitsbarriere eine flexible Schürze (54) umfasst, welche sich in einem Einsetzhohlraum des Eintrittsteils integral von einer Wand hiervon aus erstreckt, gegen die sich in einer wenigstens im Wesentlichen abdichtenden Art und Weise ein komplementär zum Einsetzhohlraum geformter Stopfenteil des Ausgussteils abschließt.

17. Vorrichtung gemäß Anspruch 1,
**dadurch gekennzeichnet, dass**
sich die Zubereitungsmittel mit einem Ausguss (52, 53) in einen Ausgabekörper (51) ergießen, um das zubereitete Getränk in einen auf einer Plattform (9) platzierten Behälter auszugeben, und, dass die Plattform axial über eine Linearführung (90) einstellbar ist und auf die Linearführung (90) unter Einfluss von manuell anhebbaren Spannmitteln (95) mit einem Reibkörper wirkt (93).

18. Vorrichtung gemäß Anspruch 17,
**dadurch gekennzeichnet, dass**
die Spannmittel eine vorgespannte Blattfeder (95) umfassen.

19. Vorrichtung gemäß Anspruch 18,
**dadurch gekennzeichnet, dass**
die Spannmittel ein Pressmittel (96) umfassen, welches, nach Berühren, eine Spannung der Blattfeder (95) vom Reibkörper (93) aufhebt.

## Revendications

1. Dispositif pour préparer une boisson comprenant un logement (2) doté d'un espace qui accueille des moyens de préparation et au moins un réservoir (10, 11, 12) pour un ingrédient de la boisson à préparer, ledit réservoir étant doté de moyens de dosage pour y prélever et délivrer une quantité définie aux moyens de préparation, les moyens de préparation débouchant dans un organe de distribution pour distribuer la boisson préparée, **se caractérisant en ce que** l'espace du dispositif peut être fermé à l'aide d'une porte (4), ladite porte (4) pouvant être actionnée d'une position fermée fermant l'espace à une position ouverte permettant l'accès à l'espace, **en ce que** sur un côté de remplissage le réservoir est en saillie à l'extérieur du logement du dispositif et peut être fermé à l'aide d'un couvercle (15), **en ce que** le couvercle et le dispositif sont dotés de moyens de verrouillage réciproques (13) qui verrouillent le couvercle (15) sur le réservoir lorsque la porte du dispositif est en position fermée (4), le couvercle (15) pouvant être dégagé du réservoir (10, 11, 12) pour laisser le côté de remplissage (16) au moins partiellement libre lorsque la porte du dispositif (4) est en position ouverte.

2. Dispositif selon la revendication 1, **se caractérisant en ce que** les moyens de verrouillage (13) comprennent un élément récepteur (13) et une cavité réceptrice (23) recevant l'élément récepteur, l'élément récepteur dépassant du couvercle (15) et de la porte du dispositif (4) et la cavité réceptrice (23) comprenant un rebord (25) qui dépasse du couvercle (15) et de la porte du dispositif (4) et derrière lequel l'élément récepteur (13) est reçu lorsque la porte du dispositif est en position fermée (4).

3. Dispositif selon la revendication 2, **se caractérisant en ce que** l'élément récepteur comprend une languette en saillie (13) du couvercle (15) qui se prolonge en direction de la porte du dispositif (4), et **en ce que** la cavité réceptrice (23) comprend un espace libre à l'intérieur de la porte du dispositif avec un rebord derrière lequel la languette est reçue lorsque la porte du dispositif est en position fermée, la languette étant totalement libérée lorsque la porte du dispositif est en position ouverte.

4. Dispositif selon la revendication 1, 2 ou 3, **se caractérisant en ce que** le couvercle (15) est reçu sur une extrémité externe du réservoir (10..12) dans un mouvement au moins substantiellement linéaire dirigé depuis un côté frontal visible vers un côté arrière du dispositif, une paroi (14) du réservoir et un côté intérieur du couvercle (15) étant tous deux pourvus d'épaulements mutuellement récepteurs (17, 18), un épaulement du couvercle étant reçu sous un épaulement de la paroi du réservoir pendant ledit mouvement linéaire.

5. Dispositif selon la revendication 4, **se caractérisant en ce que** les deux épaulements (17, 18) comprennent des flancs mutuellement récepteurs qui forment un angle avec le mouvement linéaire du couvercle.

6. Dispositif selon la revendication 1, **se caractérisant en ce que** le réservoir (10) peut être retiré du logement du dispositif sur un côté de remplissage et comprend une ouverture de sortie (37) sur un côté opposé au côté de remplissage, **en ce que** le réservoir comprend sur un côté de remplissage une poignée (30..33) qui peut pivoter pour passer d'une position opérationnelle horizontale à une position relevée mobile, **en ce que** la poignée s'étend à partir d'au moins un premier bras (32) d'un ensemble de bras (32, 33) qui est raccordé de manière à pivoter autour d'un axe de pivotement (S) à une paroi (19) du réservoir (10) et qui comprend au moins un second bras opposé (33) sur un côté de l'axe de pivotement (S) à l'opposé du premier bras (32), et **en ce que** l'ouverture de sortie (37) peut être fermée à l'aide de moyens de fermeture (35) qui s'étendent depuis le second bras (33), les moyens de fermeture (35) laissant l'ouverture de sortie (37) libre lorsque la poignée est en position horizontale (30..33) et fermant l'ouverture de sortie (37) lorsqu'elle est dans la position relevée mobile.

7. Dispositif selon la revendication 6, **se caractérisant en ce que** l'ensemble de bras (30..35) avec la poignée et les moyens de fermeture sont situés à l'intérieur du réservoir (10).

8. Dispositif selon les revendications 6 et 7, **se caractérisant en ce que** les moyens de fermeture comprennent une paroi de fermeture (35) qui peut pivoter devant l'ouverture de sortie et **en ce que** l'ensemble de bras avec la poignée et les moyens de fermeture comprennent un organe unitaire qui est raccordé au réservoir (10) de manière à pouvoir pivoter autour de l'axe de pivotement (S).

9. Dispositif selon la revendication 6, 7 ou 8, **se caractérisant en ce que** le réservoir (10) comprend un réservoir à grains pour grains de café.

10. Dispositif selon la revendication 9, **se caractérisant en ce que** les moyens de verrouillage (38) s'étendent depuis l'ensemble de bras (30..35) et verrouillent le réservoir (10) dans le logement du dispositif en position opérationnelle et libèrent le réservoir pour qu'il soit retiré en position amovible.

11. Dispositif selon la revendication 10, **se caractérisant en ce que** les moyens de verrouillage comprennent un crochet (38) qui s'engage derrière un élément saillant (39) en position opérationnelle et est libéré de l'élément saillant en position amovible.

12. Dispositif selon la revendication 1, **se caractérisant en ce que** l'organe de distribution comprend une double buse qui est en communication ouverte avec une entrée, l'organe de distribution comprenant une pièce d'entrée centrale (51), à partir de laquelle l'entrée se prolonge avec une pièce de liaison et à laquelle des buses au moins substantiellement identiques (52, 53) sont raccordées de manière séparable de chaque côté, et **en ce que** la pièce de liaison de l'entrée et les buses sont orientées au moins substantiellement de manière transversale l'une par rapport à l'autre.

13. Dispositif selon la revendication 12, **se caractérisant en ce que** l'organe de distribution comprend une buse double multiple (52, 53) en combinaison avec une entrée multiple (55), chaque entrée étant en communication ouverte individuelle avec une buse double de la buse double multiple.

14. Dispositif selon la revendication 12 ou 13, **se caractérisant en ce que** la pièce d'entrée (51) et les buses (52, 53) comprennent des pièces de plastique moulé par inj ection.

15. Dispositif selon la revendication 12, 13 ou 14, **se caractérisant en ce que** les buses (52, 55) et la pièce d'entrée s'assemblent et **en ce qu'**une barrière liquide (54) est disposée entre eux.

16. Dispositif selon la revendication 15, **se caractérisant en ce que** la barrière liquide comprend une jupe souple (54) qui, à l'intérieur d'une cavité d'insertion de la pièce d'entrée, s'étend intégralement depuis une paroi contre laquelle un connecteur de la buse formée de manière complémentaire par rapport à la cavité d'insertion se ferme d'une manière au moins substantiellement étanche.

17. Dispositif selon la revendication 1, **se caractérisant en ce que** les moyens de préparation débouchent dans un organe de distribution (51) avec une buse (52, 53) pour distribuer la boisson préparée en direction d'un support placé sur une plateforme (9), et **en ce que** la plateforme est ajustable axialement le long d'un guide linéaire (90) et agit sur le guide (90) sous l'action de moyens de serrage relevables manuellement (95) avec un organe de friction (93).

18. Dispositif selon la revendication 17, **se caractérisant en ce que** les moyens de serrage comprennent un ressort à lames sous tension (95).

19. Dispositif selon la revendication 18, **se caractérisant en ce que** les moyens de serrage comprennent un organe de pression (96) qui, lorsqu'il est touché, diminue la tension du ressort à lames (95) de l'organe de friction.
